(19) Europäisches Patentamt
European Patent Office
Office européen des brevets

(11) Veröffentlichungsnummer : **0 100 849**
**B1**

# (12) EUROPÄISCHE PATENTSCHRIFT

(45) Veröffentlichungstag der Patentschrift :
28.08.85

(21) Anmeldenummer : 83106182.5

(22) Anmeldetag : 24.06.83

(51) Int. Cl.⁴ : **B 41 J   3/21**

(54) **Vorrichtung zum Belichten punktförmiger Flächenelemente von lichtempfindlichen Aufzeichnungsträgern.**

(30) Priorität : **13.08.82 DE 3230110**

(43) Veröffentlichungstag der Anmeldung :
**22.02.84 Patentblatt 84/08**

(45) Bekanntmachung des Hinweises auf die Patenterteilung : **28.08.85 Patentblatt 85/35**

(84) Benannte Vertragsstaaten :
**CH DE FR GB IT LI SE**

(56) Entgegenhaltungen :
**DE-A- 3 203 851
US-A- 4 209 793**

(73) Patentinhaber : **OLYMPIA WERKE AG
Postfach 960 Olympiastrasse
D-2940 Wilhelmshaven (DE)**

(72) Erfinder : **Behrens, Herbert
Goethestrasse 1
D-2932 Zetel 2 (DE)**
Erfinder : **Marx, Rainer
Banter Weg 138
D-2940 Wilhelmshaven (DE)**
Erfinder : **Schmitt, Jürgen
Schweier-Aussendeich
D-2883 Stadland (DE)**

EP 0 100 849 B1

**Beschreibung**

Die Erfindung betrifft eine Vorrichtung zum Belichten punktförmiger Flächenelemente von lichtempfindlichen Aufzeichnungsträgern der im Oberbegriff des Patentanspruchs 1 angegebenen Art.

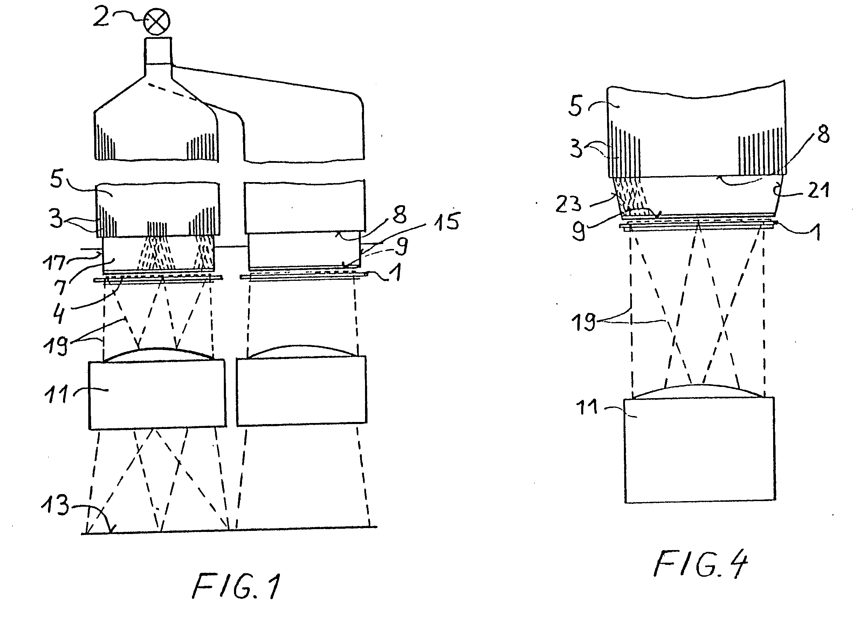

Durch den Stand der Technik sind bereits Lichtschaltelemente bei optischen Druckwerken bekannt, die je aus einer Vielzahl von Lichtschaltzellen bestehen. Von einer Lichtquelle wird diesen Lichtschaltzellen Licht mittels Lichtleitfasern zugeleitet. Die Lichtschaltzellen sind von Steuermitteln, die einen Zeichengenerator enthalten, derart selektiv erregbar, daß die von den Lichtleitfasern bereitgestellten Lichtstrahlen mittels einer Abbildungsoptik auf einem beweglichen lichtempfindlichen Aufzeichnungsträger, z. B. auf einem elektrofotografischen Zwischenträger übertragen werden. Bei solchen Druckwerksaufbauten haben die Abbildungsoptiken mindestens dann, wenn die Lichtschaltelemente in einer Reihe angeordnet sind, nur einen solchen wirksamen Durchmesser, der ungefähr der Länge der zugeordneten Lichtschaltzeile entspricht. Um die hierdurch auftretenden Ausleuchtprobleme der einzelnen Lichtschaltarrays besser beherrschen zu können, ist es durch den Stand der Technik gemäß Figur 1 bekannt, zwischen den Lichtschaltelementen 1 und den aus vielen Lichtleitfasern 3 bestehenden Lichtleiterstreifen 5 Lichteinkoppler 7 vorzusehen, um das Licht besser an die räumlich sehr kleinen Lichtschaltzellen 4 heranführen zu können. Die Lichteinkoppler 7 haben eine rechteckige Form und überragen die Enden der durch die Lichtleiterstreifen 5 erzeugten Lichtschaltzeilen, um toleranzunempfindlicher zu werden. Die Lichtschaltzellen 4 der Lichtschaltelemente 1 modulieren Lichtstrahlen 19, die über eine Abbildungsoptik 11 auf einem lichtempfindlichen Aufzeichnungsträger 13 übertragen werden.

Wie die Figur 1 zeigt, sieht jede Lichtschaltzelle 4 das Licht von mehreren Lichtleitfasern 3, da diese sich keulenartig ausbreitende Lichtkegel aussenden. Hieraus ergibt sich, daß die in den Randbereichen der Lichtschaltelemente 1 angeordneten Lichtschaltzellen 4 nur von einer Seite her mit halbem Lichtkegel ausgeleuchtet werden können. Auch werden nicht alle Lichtstrahlen, die auf die Seitenflächen 15 der Lichtkoppler 7 treffen, total reflektiert. Daher sieht die Abbildungsoptik 11 in den Randbereichen auch weniger Licht. Hinzu kommen noch weitere Probleme, die sich aus Lichtverlusten bei der Reflexion, dem Abstand der Lichtaustrittsfläche 9 gegenüber den Lichtschaltzellen 4 der Lichtschaltelemente 1 und dem an der Reflexionsfläche eventuell noch auftretenden Zerlegungseffekt des Lichtes ergeben könnten.

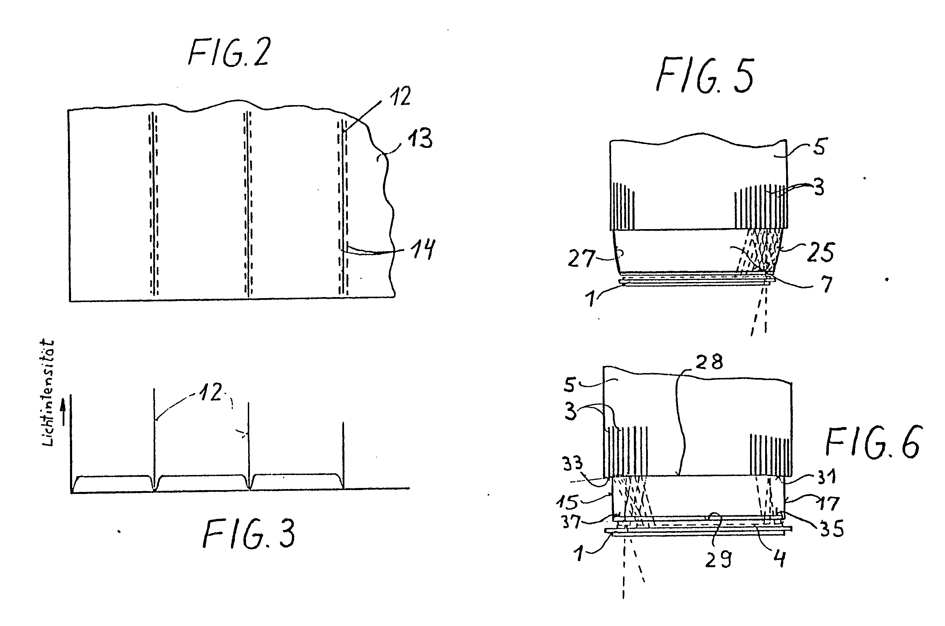

Da die Lichtschaltzellen 4 in den Randbereichen den Abbildungsoptiken zu wenig Licht zur Verfügung stellen, werden die mit Ladungen versehenen lichtempfindlichen Aufzeichnungsträger 13 auch unterschiedlich ausgeleuchtet. Dieses bedingt, daß durch die Lichtintensitätseinbrüche in den Übergangsbereichen gemäß Figur 3 beim Herstellen des Ladungsbildes auf dem Zwischenträger 13 zu geringe Entladungen durchgeführt werden, wobei dann bei der Tonerentwicklung dunklere Streifen auf dem Aufzeichnungsträger 13 gemäß Figur 2 entstehen können.

Der Erfindung liegt die Aufgabe zugrunde, eine Belichtungsvorrichtung mit zwischen Lichtleitfasern und Lichtschaltelementen angeordneten Lichteinkopplern für lichtempfindliche Aufzeichnungsträger zu schaffen, die ein streifenförmiges Abbilden des von den Lichtschaltzellen 4 modulierten Lichtes mit gleicher Intensität über die ganze Breite der Aufzeichnungszeile des lichtempfindlichen Aufzeichnungsträgers ermöglicht. Diese Aufgabe wird durch die im Patentanspruch 1 gekennzeichnete Erfindung gelöst.

Die erfindungsgemäße Vorrichtung ermöglicht ein streifenförmiges Abbilden der Lichtquelle mit gleicher Lichtintensität über die ganze Aufzeichnungszeile auf einem lichtempfindlichen Aufzeichnungsträger, derart, daß die Randbereiche der einzelnen Lichtschaltelemente und somit die gesamten Übergangsbereiche auf dem entwickelten Aufzeichnungsträger nicht mehr zu erkennen sind. Die vorteilhafte Ausgestaltung des Erfindungsgegenstandes nach Patentanspruch 2 verhindert auf einfachste Weise Lichtintensitätsverluste in den Randbereichen der Lichtschaltelemente.

Weitere vorteilhafte Ausgestaltungen des Erfindungsgegenstandes sind den weiteren Unteransprüchen zu entnehmen.

Die Erfindung wird anhand der Figuren nachstehend erläutert. Es zeigt:

Figur 1 einen optischen Drucker gemäß dem Stand der Technik in schematischer Darstellung,

Figur 2 eine Draufsicht auf einen Aufzeichnungsträger mit schlecht ausgeleuchteten Bereichen gemäß dem Stand der Technik,

Figur 3 eine zu Figur 2 entsprechende Darstellung der Lichtintensitätsverluste in den Übergangsbereichen,

Figur 4 eine Teilansicht eines optischen Druckers mit einer ersten erfindungsgemäßen Ausführungsform für die Lichteinkoppler,

Figur 5 eine weitere Ausführungsform der Reflexionsflächen der Lichteinkoppler in den Randbereichen,

Figur 6 eine dritte Ausführungsform für die Lichteinkoppler mit abgeänderter Lichteintrittsfläche,

Figur 7 Lichteinkoppler mit parallelen Seitenflächen, aber mit schräg angeordneten Lichtleitfasern,

Figur 8 eine weitere abgeänderte Form der Lichteintrittsfläche und

Figur 9 eine Einzelheit aus Figur 8.

Der in der Figur 1 prinzipmäßig dargestellte optische Drucker des Standes der Technik enthält eine Lichtquelle 2, deren Licht über zu Lichtleiterstreifen 5 zusammengefaßten Lichtleitfasern 3 zu Lichteinkopplern 7 geleitet wird. Um eine gute Einkopplung der Lichtstrahlen von den Lichtleitfasern 3 in die Lichteintrittsfläche 8 des Lichteinkopplers 7 zu gewährleisten, liegen die freien Enden der Lichtleitfasern 3 möglichst senkrecht unter Vorspannung auf den Lichteintrittsflächen 8 auf. Das sich kegelförmig ausbreitende Licht trifft nach dem Verlassen der Lichtaustrittsfläche 9 der Lichteinkoppler 7 auf Lichtschaltzellen 4 von Lichtschaltelementen 1 auf. Diese Lichtschaltelemente 1 bestehen aus vielen Lichtschaltzellen 4, z. B. aus 512 magnetooptischen Lichtschaltzellen 4, welche von einer nicht dargestellten Schaltungsanordnung mit z. B. einem Zeichengenerator selektiv erregbar sind, um Lichtstrahlen wahlweise zu modulieren. Diese gesteuerten Lichtstrahlen werden über eine Abbildungsoptik 11 auf einen lichtempfindlichen Aufzeichnungsträger 13 abgebildet.

Da auf die Randbereiche der Lichtaustrittsflächen 9 weniger Lichtstrahlen auftreffen als im mittleren Bereich ergeben sich nach Figur 3 im Übergangsbereich 12 zwischen den einzelnen Lichtschaltelementen 1 Lichtintensitätsverluste, die auf dem entwickelten Aufzeichnungsträger 13 dunkle Streifen 14 (Figur 2) hinterlassen. Durch die geringere Lichtintensität in den Übergangsbereichen 12 werden auf dem lichtempfindlichen Aufzeichnungsträger 13 auch nicht die vorhandenen Ladungen gelöscht. Die verbleibenden Restladungen ziehen nämlich Toner an und erzeugen durch die folgende Fixierung die dunklen Streifen 14. Die Erfindung will die oben genannten Nachteile nun vermeiden.

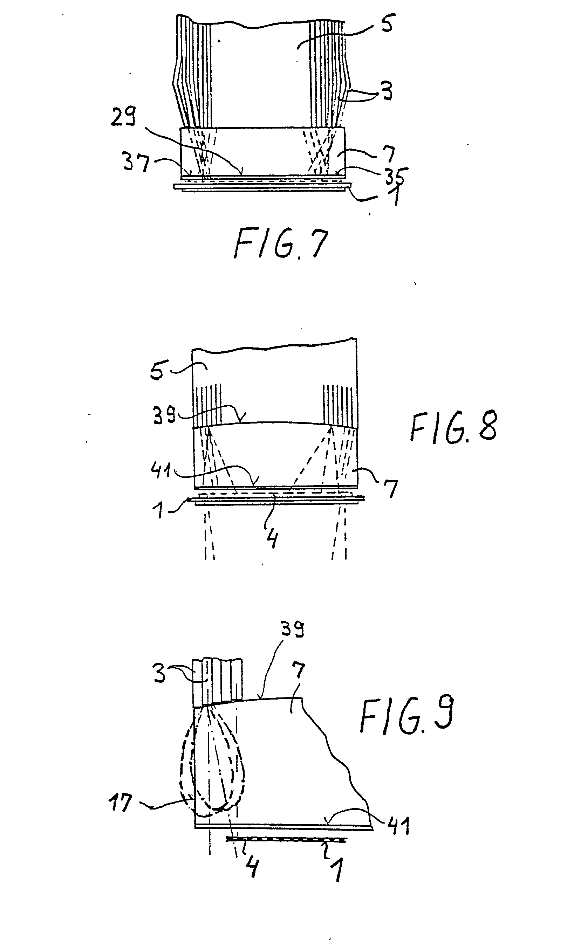

Eine erste Ausführungsform ist in der Figur 4 dargestellt. Hierbei sind die Enden der Lichtleiterstreifen 5 in Aufzeichnungszeilenrichtung etwas breiter als die Lichteintrittsfläche 8 der Lichteinkoppler 7. Die Lichteinkoppler 7 bestehen übrigens aus dünnen Glasplättchen, die senkrecht zur Zeichenebene gemäß Figur 4 eine Dicke von 0,3 mm aufweisen. Die Seitenflächen 21, 23 der Lichteinkoppler 7 sind von der Lichteintrittsfläche 8 zu der Lichtaustrittsfläche 9 abgeschrägt, derart, daß die Lichtaustrittsflächen 9 in Aufzeichnungszeilenrichtung kürzer als die Länge der Lichteintrittsfläche 8 ist. Die als Ablenkflächen ausgebildeten abgeschrägten Seitenflächen 21, 23 reflektieren die auftreffenden Lichtstrahlen derart, daß das aus der Lichtaustrittsfläche 9 austretende und durch die Lichtschaltzellen 4 modulierte Licht eine gleichmäßige Ausleuchtung auf dem Aufzeichnungsträger 13 erzeugt. Durch die abgeschrägten Seitlichenlichtablenklächen 21, 23 fallen mehrere Lichtkeulen optimal durch den kritischen Bereich. Von der Lichtaustrittsfläche 9 gelangt dann das Licht zu den Lichtschaltzellen 4 von Lichtschaltelementen 1, von denen die Lichtstrahlen 19 über Objektive 11 zu dem lichtempfindlichen Aufzeichnungsträger 13 weitergeleitet werden.

Im Rahmen der Erfindung können die seitlichen Ablenkflächen auch als Krümmungsflächen 25, 27 ausgebildet sein, die gegenüber den Lichtstrahlen in den Glasplättchen konkav ausgebildet sind. Auch hierdurch wird eine gleichmäßige Lichtverteilung über die ganze Aufzeichnungszeile auf dem Aufzeichnungsträger 13 gewährleistet, siehe Figur 5.

Eine gleichmäßige Lichtintensität läßt sich auch aus effektiv kürzeren Lichtaustrittsflächen 29 gemäß Figur 6 dadurch erzielen, daß die schmalen Seitenflächen 15, 17 der Lichteinkoppler 7 parallel zur Lichthauptrichtung verlaufen und daß die Lichteintrittsflächen 28 im mittleren Bereich senkrecht zur Hauptrichtung des Lichts und in den Randbereichen Abschrägungen 31, 33 aufweisen, durch die die äußeren Lichtstrahlen zu den effektiv kürzeren Lichtaustrittsflächen 29 hin brechbar sind. Die Randbereiche 35, 37 der Lichtaustrittsfläche 29 bleiben weitgehend lichtfrei. Weiterhin ist die Breite der Lichtschaltelemente 1 geringfügig kleiner als die Breite der effektiv wirksamen Lichtaustrittsfläche 29.

Eine effektiv kürzere Lichtaustrittsfläche 29 entsprechend Figur 6 läßt sich nach Figur 7 auch dadurch erzielen, daß die äußeren Lichtleitfasern 3 der Lichtleiterstreifen 5 derart schräg angeordnet sind, daß ihre Lichtstrahlen auf die Randbereiche der effektiv kürzeren Lichtaustrittsfläche 29 treffen. Auch hierdurch wird eine gleichmäßige Intensitätsverteilung des Lichtes auf dem Aufzeichnungsträger 13 durch das aus der Lichtaustrittsfläche 29 heraustretenden Lichtes erzielt, wobei die Lichteintritts- (28) als auch die Lichtaustrittsfläche 29 senkrechte Ebenen zur Lichthauptrichtung bilden.

In der Figur 8 ist eine weitere Ausführungsform dargestellt, bei der die Lichteintrittsfläche 39 gegenüber der eben ausgebildeten Lichtaustrittsfläche 41 gewölbt ausgebildet ist, derart, daß die aus den rechtwinklig ausgebildeten Enden der Lichtleitfaser 3 austretenden Lichtstrahlen zu einer schmaleren Lichtaustrittsfläche 41 hin gebrochen werden. In der Figur 9 ist gestrichelt eine normale Lichtkeule bei ebener Lichtaustrittsfläche und in strichpunktierter Darstellung eine Lichtkeule bei der gewölbten Lichtaustrittsfläche 39 dargestellt.

Durch die Erfindung werden die von den Lichteintrittsflächen ausgehenden Lichtkeulen derart gelenkt, daß von den kürzeren Lichtaustrittsflächen kommende und durch die Lichtschaltzellen moduliertes Licht mit gleicher Intensität auf dem Aufzeichnungsträger angelangt. Hierdurch werden einwandfreie Druckbilder auf den lichtempfindlichen Aufzeichnungsträgern erzeugt, wobei die durch Intensitätsschwankungen erzeugten dunklen Streifen auf den Aufzeichnungsträgern der bekannten Anordnungen auf einfachste Weise vermieden werden.

## Patentansprüche

1. Vorrichtung zum rasterbildmäßigen Belichten von bewegbaren lichtempfindlichen Aufzeich-

nungsträgern (1) mit Lichteinkopplern (7), die das aus Lichtleitfasern (3) austretende Licht einer Lichtquelle (2) zu selektiv erregbaren in Reihen angeordneten Lichtschaltzellen (4) von Lichtschaltelementen leiten und die aus in quer zur Lichthauptrichtung der Lichtleitfaser (3) ausgebildeten dünnen Glasplättchen bestehen, deren Lichteintrittsflächen (8 ; 28 ; 39) kürzer als die Lichtzeilen und länger als die Lichtelemente (4) sind, wobei mehrere Lichtschaltelemente mit diesen zugeordneten Lichteinkopplern (7), Lichtleiterstreifen und weiteren optischen Mitteln zum Abbilden der Lichtschaltzellen auf dem Aufzeichnungsträger (1), über die Breite der Aufzeichnungszeile vorgesehen sind, dadurch gekennzeichnet, daß die Lichteinkoppler (7) Lichtablenkflächen (21, 23) aufweisen, durch die das in die Lichteintrittsflächen (8, 28, 39) der Lichteinkoppler (7) eintretende Licht zu gegenüber diesen (8, 28, 39) in Aufzeichnungszeilenrichtung beidseitig gekürzten Lichtaustrittsflächen (9, 29, 41) auf der Ausgangsseite der Lichteinkoppler (7) derart lenk- und verteilbar ist, daß eine streifenförmige Abbildung des von den Lichtschaltzellen (4) modulierten Lichtes mit gleicher Intensität über die ganze Aufzeichnungszeile des lichtempfindlichen Aufzeichnungsträgers (13) entsteht.

2. Vorrichtung nach Anspruch 1, dadurch gekennzeichnet, daß die die Lichteintritts- (8) und die Lichtaustrittsflächen (9) verbindenden schmalen Seitenflächen (21, 23) als Lichtablenkflächen derart ausgebildet sind, daß das in den äußeren Bereichen der Lichteintrittsfläche (8) einfallende Licht verlustarm zu der Lichtaustrittsfläche (9, 29, 41) hin reflektiert wird.

3. Vorrichtung nach Anspruch 2, dadurch gekennzeichnet, daß die Seitenflächen (21, 23) von den Lichteintritts- (8) zu den -austrittsflächen (9) konvergent verlaufende Schrägflächen sind.

4. Vorrichtung nach Anspruch 2, dadurch gekennzeichnet, daß die Seitenflächen (21, 23) von den in Aufzeichnungszeilenrichtung längeren Lichteintrittsflächen (8) zu den kürzeren Lichtaustrittsflächen (9) verlaufende Krümmungsflächen (25, 27) sind, die gegenüber den Lichtstrahlen in del als Lichtkoppler (7) ausgebildeten Glasplättchen konkav ausgebildet sind.

5. Vorrichtung nach Anspruch 1, dadurch gekennzeichnet, daß die schmalen Seitenflächen (15, 17) der Lichtkoppler (7) parallel zur Lichthauptrichtung verlaufen und daß die Lichteintrittsflächen (8) im mittleren Bereich senkrecht zur Hauptrichtung des Lichtes und in den Randbereichen Abschrägungen (31, 33) aufweisen, durch die die äußeren Lichtstrahlen zu der kleineren Lichtaustrittsfläche (9) hin brechbar sind.

6. Vorrichtung nach Anspruch 1, dadurch gekennzeichnet, daß die Lichteintrittsfläche (8) eine senkrechte Eben zur Hauptrichtung des Lichtes bildet und daß die äußeren Lichtleitfasern (3) der Lichtleitfaserbündel (5) zu den Randbereichen der kleineren Lichtaustrittsflächen (29) hin ausgerichtet sind.

7. Vorrichtung nach Anspruch 1, dadurch gekennzeichnet, daß die Lichteintrittsflächen (39) gegenüber der eben ausgebildeten Lichtaustrittsflächen (41) gewölbt ausgebildet sind.

## Claims

1. A device for the exposure, in a screen pattern, of movable light-sensitive media (1), having means (7) for coupling in light which convey the light of a light source (2), emerging from optical fibres (3), to light switching cells (4) of light switching elements, which cells can be excited selectively and are disposed in rows, and which coupling means consist of thin small glass plates which are constructed transversely to the main light direction of the optical fibres (3) and the light-admission surfaces (8 ; 28 ; 39) of which are shorter than the light lines and longer than the light elements (4), there being provided a plurality of light switching elements with means (7) for coupling in light associated with these, optical fibre strips and further optical means for forming the image of the light switching cells on the recording medium (1) over the width of the recording line, characterised in that the means (7) for coupling in light comprise light deflecting surfaces (21, 23) by means of which the light entering the light-admission surfaces (8, 28, 39) of the means (7) for coupling in light can be guided and distributed to light exit surfaces (9, 29, 41) at the outlet side of the means (7) for coupling in light, which light exit surfaces are shortened at both sides in the direction of the recording line in comparison with these (8, 28, 39), so that a striplike image of the light modulated by the light switching cells (4) is formed with equal intensity over the whole recording line of the light-sensitive recording medium (13).

2. A device as claimed in Claim 1, characterised in that the narrow lateral surfaces (21, 23) connecting the light-admission surfaces (8) and the light exit surfaces (9) are constructed in the form of light deflecting surfaces in such a manner that the light incident in the outer regions of the light-admission surface (8) is reflected with little loss to the light exit surface (9, 29, 41).

3. A device as claimed in Claim 2, characterised in that the lateral surfaces (21, 23) are inclined surfaces extending converging from the light-admission surfaces (8) to the light exit surfaces (9).

4. A device as claimed in Claim 2, characterised in that the lateral surfaces (21, 23) are curved surfaces (25, 27) extending from the light admission surfaces (8), which are longer in the direction of the recording line, to the shorter light exit surfaces (9), which curved surfaces are made concave in relation to the light rays in the small glass plates constructed in the form of light couplers (7).

5. A device as claimed in Claim 1, characterised in that the narrow lateral surfaces (15, 17) of the light couplers (7) extend parallel to the main light direction and that the light admission surfaces (8) comprise facets (31, 33) in the central region perpendicular to the main direction of the light and in the marginal regions, through which facets the outer light rays can be refracted towards the smaller light exit surface (9).

6. A device as claimed in Claim 1, characterised in that the light admission surface (8) forms a plane perpendicular to the main direction of the light and that the outer optical fibres (3) of the bundle of optical fibres (5) are aligned towards the marginal regions of the smaller light exit surfaces (29).

7. A device as claimed in Claim 1, characterised in that the light admission surfaces (39) are made convex in relation to the light exit surfaces (41) which are of plane construction.

**Revendications**

1. Dispositif pour assurer l'exposition, comme pour une image tramée, de supports d'enregistrement photosensibles mobiles (1) à l'aide de coupleurs (7) d'entrée de lumière, qui conduisent la lumière d'une source lumineuse (2), provenant de fibres (3) conductrices de lumière jusqu'à des cellules (4) distributrices de lumière d'éléments distributeurs de lumière qui sont excitables sélectivement et disposées en série, et qui se composent de minces plaquettes de verre disposées perpendiculairement à la direction principale de lumière des fibres (3) conductrices de lumière, et dont les surfaces (8 ; 28 ; 39) d'entrée de lumière sont plus courtes que les cellules et plus longues que les éléments (4) distributeurs de lumière, auquel cas plusieurs éléments distributeurs de lumière associés à des coupleurs (7) d'entrée de lumière, à des bandes conductrices de lumière et à d'autres moyens optiques sont prévus pour former des images des cellules distributrices de lumière sur le support d'enregistrement (1) sur la largeur de la ligne d'enregistrement, caractérisé en ce que les coupleurs (7) d'entrée de lumière comportent des surfaces (21, 23) de déviation de lumière par lesquelles la lumière arrivant sur les surfaces (8, 28, 39) d'entrée de lumière des coupleurs (7) d'entrée de lumière peut être dirigée et répartie vers des surfaces (9, 29, 41) de sortie de lumière raccourcies des deux côtés placées en regard desdites surfaces (8, 28, 39) dans la direction des lignes d'enregistrement sur le côté de sortie des coupleurs (7) d'entrée de lumière de telle sorte qu'on obtienne une image en forme de bande de la lumière modulée par les cellules (4) distributrices de lumière, avec la même intensité, sur toute la ligne d'enregistrement du support d'enregistrement photosensible (13).

2. Dispositif selon la revendication 1, caractérisé en ce que les surfaces latérales étroites (21, 23) reliant les surfaces (8) d'entrée de lumière et les surfaces (9) de sortie de lumière sont agencées comme des surfaces de déviation de lumière, de manière que la lumière arrivant dans les zones extérieures de la surface (8) d'entrée de lumière soit réfléchie avec peu de perte vers la surface (9, 29, 41) de sortie de lumière.

3. Dispositif selon la revendication 2, caractérisé en ce que les surfaces latérales (21, 23) sont des surfaces inclinées qui convergent des surfaces (8) d'entrée de lumière vers les surfaces (9) de sortie de lumière.

4. Dispositif selon la revendication 2, caractérisé en ce que les surfaces latérales (21, 23) sont des surfaces incurvées (25, 27) qui s'étendent depuis les surfaces (8) d'entrée de lumière plus longues dans la direction des lignes d'enregistrement jusqu'aux surfaces (9) de sortie de lumière plus courtes et qui ont un profil concave par rapport aux rayons lumineux dans les plaquettes en verre agencées comme des coupleurs (7) de lumière.

5. Dispositif selon la revendication 1, caractérisé en ce que les surfaces latérales étroites (15, 17) des coupleurs (7) de lumière sont orientées parallèlement à la direction principale de la lumière et en ce que les surfaces (8) d'entrée de lumière comportent dans une zone centrale, perpendiculairement à la direction principale de la lumière et dans les zones marginales, des parties biseautées (31, 33) par lesquelles les rayons lumineux extérieurs peuvent être réfractés en direction de la surface (9) de sortie de lumière plus petite.

6. Dispositif selon la revendication 1, caractérisé en ce que la surface (8) d'entrée de lumière forme un plan perpendiculaire à la direction principale de la lumière et en ce que les fibres extérieures (3) conductrices de lumière du faisceau (5) de fibres conductrices de lumière sont dirigées vers les zones marginales des petites surfaces (29) de sortie de lumière.

7. Dispositif selon la revendication 1, caractérisé en ce que les surfaces (39) d'entrée de lumière sont incurvées par rapport aux surfaces (41) de sortie de lumière de profil plan.

0 100 849

FIG.4

FIG.1

FIG.2

FIG.5

FIG.3

FIG.6

Lichtintensität

FIG. 7

FIG. 8

FIG. 9